**Europäisches Patentamt**

**European Patent Office**

**Office européen des brevets**

(11) Veröffentlichungsnummer: **0 000 794**
**B1**

(12) **EUROPÄISCHE PATENTSCHRIFT**

(45) Veröffentlichungstag der Patentschrift:
**20.05.81**

(21) Anmeldenummer: **78200086.3**

(22) Anmeldetag: **07.07.78**

(51) Int. Cl.³: **B 60 T 15/04**

㉝ Priorität **13.08.77 DE 2736661**

(43) Veröffentlichungstag der Anmeldung:
**21.02.79 Patentblatt 79/4**

(45) Bekanntmachung des Hinweises auf die Patenterteilung:
**20.05.81 Patentblatt 81/20**

(84) Benannte Vertragsstaaten:
**CH DE FR GB SE**

(56) Entgegenhaltungen:
**DE-A-1 935 537**
**DE-A-1 943 753**
**US-A-3 291 539**

(73) Patentinhaber: **ROBERT BOSCH GMBH, Postfach 50, D-7000 Stuttgart 1 (DE)**

(72) Erfinder: **Siebold, Manfred, Amsterdamer Strasse 6, D-7030 Böblingen (DE)**

(54) **Zweikreis-Steuerventil.**

EP 0 000 794 B1

## Zweikreis-Steuerventil

### Stand der Technik

Die Erfindung geht aus von einem Zweikreis-Steuerventil nach der Gattung des Hauptanspruchs. Ein derartiges Steuerventil ist bekannt (US-A-3 291 539).

Bei diesem bekannten Steuerventil wird zuerst das dem Stößel benachbarte, erste Einzelventil umgeschaltet und dann wirkt der in den ersten Bremskreis eingesteuerte Druck auf den das zweite Einzelventil umschaltenden Kolben ein. Dadurch sind die Druckanstiege, wie überhaupt alle Druckänderungen in den beiden Bremskreisen nie gleichmäßig, was eine unterschiedliche Bremsung an den verschiedenen Gruppen von Bremszylindern nach sich zieht.

Des weiteren ist es durch die DE-A-19 35 537 bereits bekannt, bei einem Dreikreis-Steuerventil einen Stößel zu verwenden, der ein erstes Einzelventil des Steuerventils durchgreift.

Aufgabe der Erfindung ist es, das Ansprechverhalten der beiden Einzelventile und die von diesen in die beiden Kreise eingesteuerten Druckänderungen durchaus gleich zu halten.

Diese Aufgabe wird gelöst durch ein Steuerventil mit den kennzeichnenden Merkmalen des Hauptanspruchs.

### Beschreibung der Erfindung

Ein Zweikreis-Steuerventil ist als Zweikreis-Bremsventil eingesetzt und hat ein Gehäuse 1, in das von oben eine Betätigungsstange 2 eingesetzt ist. Die Stange 2 drückt auf eine Hülse 3 mit einer Schulter 4, unter der eine Wegfeder 5 liegt. Das andere Ende der Wegfeder 5 greift an einem Stufungs- und Rückwirkkolben 6 an, der an seinem anderen Ende einen Auslaßventilsitz 7 eines ersten Einzelventils 8 trägt. Ein zweiter Ventilsitz 9 des Einzelventils 8 befindet sich an einem feststehenden Gehäuseteil, der zum Kolben 6 hin eine Druckwechselkammer 10 begrenzt und der innen eine Vorratskammer 11 aufnimmt. Die Vorratskammer 11 ist über einen Gewindeanschluß an eine Vorratsleitung eines Bremskreises I angeschlossen, der über die Druckwechselkammer 10 und einen Gewindeanschluß gespeist wird. Mit den beiden Ventilsitzen 7 und 9 arbeitet ein Schließkörper 13 zusammen, der von einer Ventilfeder 12 gegen die Sitze gedrückt wird. Das andere Ende der Ventilfeder 12 stützt sich an einer Innenschulter 14 eines Wiegekolbens 17 ab, der einerseits die Druckwechselkammer 10 des Bremskreises I und andererseits eine Druckwechselkammer des Bremskreises II begrenzt. Der Wiegekolben hat einen koaxialen Rohransatz 15, dessen eines Ende eine in das Gehäuse 1 eingesetzte Ringwand 16 abgedichtet durchdringt und auf den der Schließkörper 13 mit einer Ringdichtlippe axialbeweglich aufgesetzt ist. Der Innendurchmesser der Ringwand 16 ist gleich dem Durchmesser des Auslaßventilsitzes 22 des zweiten Einzelventils 19, damit der Wiegekolben 17 nach oben und unten die gleichen Wirkflächen hat. Durch den Rohransatz 15 ist der Wiegekolben 17 mit einer axialen Durchgangsbohrung 21 versehen. An seinem Umfang trägt er zwei O-Ringe 24 und 25, zwischen denen eine Außenluftkammer 17' angeordnet ist. Diese Außenluftkammer 17' ist über einen Radialkanal 20 mit der Bohrung 21 verbunden. Der Wiegekolben 17 ist außerdem an seinem anderen Ende mit dem Auslaßventilsitz 22 versehen, der in einen gehäusefesten Einlaßsitz 18 eines zweiten Einzelventils 19 hineinragt. Der Einlaßsitz 18 liegt zwischen einer Druckwechselkammer 26 und einer Vorratskammer 27, in der ein Schließkörper 28 des zweiten Einzelventils für einen Bremskreis II angeordnet ist. Nach unten wird das Gehäuse 1 durch eine eingesetzte Wand 1' abgeschlossen, an der sich sowohl eine Ventilfeder 29 des zweiten Einzelventils 19 als auch eine auf den Wiegekolben 17 einwirkende Druckfeder 30 abstützt. Die Wand 1' hat einen rohrzylindrischen Ansatz, auf den der Schließkörper 28 mit einer Ringdichtlippe axialbeweglich aufgesetzt ist. Der Schließkörper 13 des ersten Einzelventils 8 und der Schließkörper 28 des zweiten Einzelventils 19 sind zu ihrer Druckentlastung axial durchbohrt. Über diese Durchbohrungen der Schließkörper und über einen Außenluftanschluß 23 ist eine gemeinsame Verbindung der beiden Einzelventile 8 und 19 zur Außenluft hergestellt.

Die Feder 30 liegt innerhalb des zweiten Einzelventils 19. Ihr oberes Ende untergreift einen Federteller 31 und versucht, diesen an einer radialen Wand 32 des Wiegekolbens 17 festzuhalten. Diese Wand 32 ist zum Luftdurchgang mit mehreren achsparallelen Durchbrüchen 33 versehen. Außerdem hat die Wand 32 eine koaxiale Bohrung 34, die von einem Ende eines Stößels 35 durchgriffen wird, das mit dem Federteller 31 in Berührung steht. Der Stößel 35 ist mit seinem anderen Ende im Stufungs- und Rückwirkkolben 6 verschraubt, der ebenfalls innen mehrere achsparallele Durchbrüche 36 für den Luftdurchgang aufweist. Die Verschraubung ist längenveränderlich, um den Abstand des Auslaßventilsitzes 22 des zweiten Einzelventils 19 zum Auslaßventilsitz 7 des ersten Einzelventils 8 zu justieren.

### Wirkungsweise

Bei gelöster Bremse sind die Schließkörper 13 und 28 von den beiden Auslaßventilsitzen 7 und 22 abgehoben, und die Bremskreise I und II sind über den gemeinsamen Außenluftanschluß 23 entlüftet.

Wird gebremst, so läuft die Betätigungsstange 2 in das Bremsventil hinein und betätigt unter Durchdrücken der Wegfeder 5 den Stufungs-und Rückwirkkolben 6. Mit dem Kolben 6 bewegt sich auch der Stößel 35 nach unten, und hebt den Federteller 31 vom Wiegekolben 17 ab. Damit ist die Einwirkung der Druckfeder 31 auf den Wiegekolben 17 aufgehoben, und der Wiegekolben 17 unterliegt jetzt nur noch der Kraft der Ventilfeder 12, so daß er einen Weg nach unten macht, bis er am Schließkörper 28 anstößt. Das Auslaßventil des zweiten Einzelventils 19 ist dann geschlossen.

Beim Weiterbewegen der Betätigungsstange 2 in Bremsbetätigungsrichtung schließt dann das Auslaßventil des ersten Einzelventils 8, das einen größeren Öffnungshub aufweist als das andere Auslaßventil.

Ein Öffnen eines Einlaßventils kann zuerst am Einzelventil 8 stattfinden. Bei entsprechender Federauslegung kann aber auch zuerst das Einlaßventil des Einzelventils 19 geöffnet werden. In beiden Fällen sorgt der Wiegekolben 17 sofort für einen Ausgleich, indem er unter dem in die Druckwechselkammern 10 oder 26 eingesteuerten Druck so gut wie gleichzeitig das Einlaßventil des anderen Einzelventils aufmacht. Die Bremszylinder beider Bremskreise I und II werden dann gleichmäßig mit gleichhohem Bremsdruck versorgt. Bei geöffneten Einlaßventilen sind die Kräfte der Druckfeder 30 und der beiden Ventilfedern 12 und 29 der Einzelventile 8 und 19 maßgebend für die Rückstellkräfte an den beiden Einzelventilen 8 und 19. Die Federkraft der Ventilfeder 12 ist außerdem bestimmend für die Öffnungskraft am zweiten Einzelventil 19.

Anstatt der Stahlfeder 5 kann auch eine Gummifeder als Wegfeder verwendet werden. Die Anschlüsse für Vorratsbehälter und Bremszylinder sind für jeweils einen Bremskreis I bzw. II auf gleicher Höhe am Gehäuse 1 angeordnet.

Durch den innerhalb des Wiegekolbens 17 angeordneten Stößel 35 und durch die ohne Platzverbrauch angeordnete Feder 30 baut das erfindungsgemäße Steuerventil sehr kompakt, so daß es bei seinem Einbau sehr wenig Platz verbraucht.

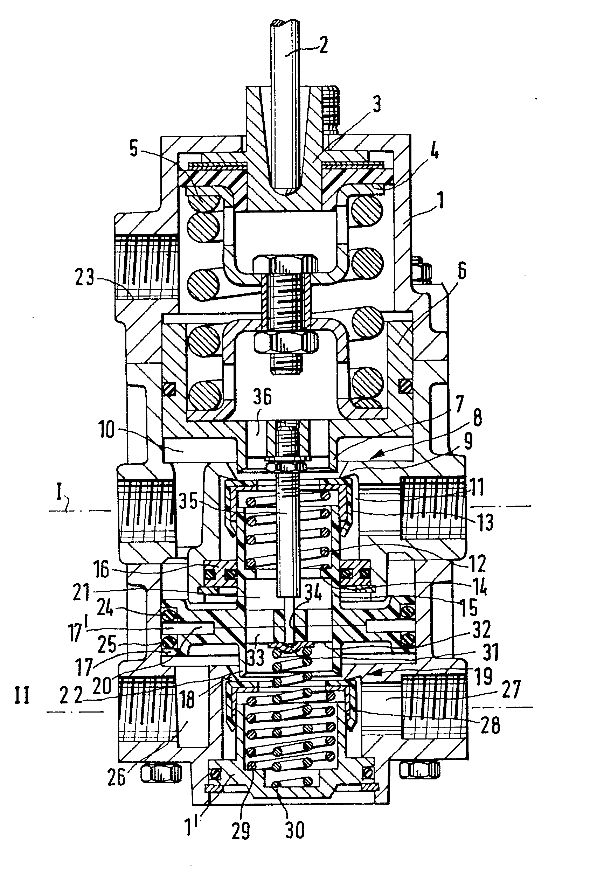

**Patentansprüche**

1. Zweikreis-Steuerventil, insbesondere für eine Bremsanlage von Kraftfahrzeugen, mit zwei in einem Ventilgehäuse (1) hintereinander angeordneten, mit Ventilfedern (12, 29) bestückten Einzelventilen (8, 19), ferner mit einer Betätigungsstange (2), die in das Ventilgehäuse eintaucht und dort über eine Wegfeder (5) und einen Kolben (6) mit einem Teil des ersten Einzelventils (8) mechanisch zusammenarbeitet, und mit einer Einrichtung zum Betätigen des zweiten Einzelventils (19) und mit einem den beiden in zwei Bremskreise eingesteuerten Bremsdrücken unterliegenden Wiegekolben (17) sowie mit einem Stößel (35), der die Einwirkung einer zwischen den Wiegekolben und eine feststehende Gehäusewand eingesetzten Druckfeder (30) aufheben kann, dadurch gekennzeichnet, daß die Ventilfeder (12) des ersten Einzelventils (8) sich einerseits am Wiegekolben (17) und andererseits über einen Ventil-Schließkörper (13) am Gehäuse (Ventilsitz 9) abstützt und ihre Kraftabstützung auf den Wiegekolben (17) bei unbetätigtem Steuerventil durch die Druckfeder (30) aufgehoben ist, daß ferner der Stößel (35) an dem von der Betätigungsstange (2) bewegten Kolben (6) befestigt ist und in an sich bekannter Weise das erste Einzelventil (8) durchgreift, und daß die Kraft der bei einer solchen Betätigung über einen Schließkörper (28) des zweiten Einzelventils (19) auf den Wiegekolben (17) einwirkenden Ventilfeder (29) gegen die Kraft der Ventilfeder (12) des ersten Einzelventils (8) auswiegend kompensiert ist.

2. Zweikreis-Steuerventil nach Anspruch 1, dadurch gekennzeichnet, daß die Ventilfeder (12) des ersten Einzelventils (8) maßgebend ist für die Öffnungskräfte am zweiten Einzelventil (19).

3. Zweikreis-Steuerventil nach Anspruch 1 oder 2, dadurch gekennzeichnet, daß zwischen dem Wiegekolben (17) und dem ihm zugekehrten Ende der Druckfeder (30) ein Federteller (31) eingesetzt ist, der vom Ende des Stößels (35) vom Wiegekolben abhebbar ist.

4. Zweikreis-Steuerventil nach einem der Ansprüche 1 bis 3, dadurch gekennzeichnet, daß der Wiegekolben (17) einen Rohransatz (15) hat, auf den ein Schließkörper (13) des ersten Einzelventils (8) mit einer angeformten Ringdichtlippe gleitbar aufgesetzt ist.

5. Zweikreis-Steuerventil nach einem der Ansprüche 1 bis 4, dadurch gekennzeichnet, daß der Wiegekolben (17) eine Innenschulter (14) hat, die Anlage für die auf den Schließkörper (13) einwirkende Ventilfeder (12) des ersten Einzelventils (8) ist.

6. Zweikreis-Steuerventil nach Anspruch 4 oder 5, dadurch gekennzeichnet, daß der Wiegekolben (17) mit seinem dem ersten Einzelventil (8) zugekehrten Ende seines Rohransatzes (15) eine Ringwand (16) durchgreift, deren Innendurchmesser dem Durchmesser des Auslaßventilsitzes (22) des zweiten Einzelventils (19) entspricht.

7. Zweikreis-Steuerventil nach einem der Ansprüche 1 bis 6, dadurch gekennzeichnet, daß der Stößel (35) in dem Kolben (6) längenveränderlich verschraubt ist.

**Claims**

1. Dual-circuit control valve, especially for a braking system of motor vehicles, having two separate valves (8, 19) which are disposed one after the other in a valve housing (1) and are equipped with valve springs (12, 29), also having an actuating rod (2) which enters the valve housing and co-operates therein mechanically with one portion of the first separate valve (8) by way of a travel spring (5) and a piston (6), and having a device for actuating the second separate valve (19) and having a balancing piston (17) which is subjected to the two brake pressures introduced into two brake circuits, and also having a stem (35) which can counteract the effect of a compression spring (30) inserted between the balancing piston and a fixed housing wall, characterised in that the valve spring (12) of the first separate valve (8) is supported, at the one end, against the balancing piston (17) and, at the other end, by way of a valve closure element (13) against the housing (valve seat 9), and its force support upon the balancing piston (17) when the control valve is unactuated is alleviated by the compression spring (30), also in that the stem (35) is secured to the piston (6), which is moved by the actuating rod (2), and reaches through the first separate valve (8) in a manner known per se, and in that the force of the valve spring (29), which acts upon the balancing piston (17), upon such an actuation, by way of a closure element (28) of the second separate valve (19), against the force of the valve spring (12) of the first separate valve (8) is compensated in a counterbalanced manner.

2. Dual-circuit control valve as claimed in claim 1, characterised in that the valve spring (12) of the first separate valve (8) is decisive for the opening forces at the second separate valve (19).

3. Dual-circuit control valve as claimed in claim 1 or 2, characterised in that a spring plate (31) is inserted between the balancing piston (17) and the end of the compression spring (30) facing the balancing piston and can be lifted from the end of the stem (35) by the balancing piston.

4. Dual-circuit control valve as claimed in one of claims 1 to 3, characterised in that the balancing piston (17) has a tubular projection (15) upon which a closure element (13) of the first separate valve (8) with a moulded-on annular sealing lip is slidably placed.

5. Dual-circuit control valve as claimed in one of claims 1 to 4, characterised in that the balancing piston (17) has an inner shoulder (14) which is the abutment for the valve spring (12) acting upon the closure element (13), of the first separate valve (8).

6. Dual-circuit control valve as claimed in claim 4 or 5, characterised in that the end of the tubular projection of the balancing piston (17) facing the first separate valve (8) reaches through an annular wall (16), whose internal diameter corresponds to the diameter of the outlet valve seat (22) of the second separate valve (19).

7. Dual-circuit control valve as claimed in one of claims 1 to 6, characterised in that the stem (35) is screwed in the piston (6) in a length-varying manner.

**Revendications**

1. Soupape de commande à deux circuits, notamment pour une installation de frein de véhicule automobile, avec deux soupapes indépendantes (8, 19) munies de ressorts de soupape (12, 29) et disposées l'une derrière l'autre dans un carter (1), avec en outre une tige de manoeuvre (2) qui pénètre dans le carter (1) et y coopère mécaniquement, par l'intermédiaire d'un ressort à grande sourse (5) et d'un piston (6), avec une partie de la première soupape (8), et avec un dispositif pour la manoeuvre de la deuxième soupape indépendante (19) et avec un piston équilibré (17) soumis aux deux pressions introduites dans les deux circuits de frein, ainsi qu'avec un poussoir (35) qui peut supprimer l'action d'un ressort de compression (30) introduit entre le piston (17) et une paroi fixe du carter (1), caractérisée en ce que le ressort de soupape (12) de la première soupape (8) s'appuie, d'une part, au piston (17) et, d'autre part, au carter (siège de soupape 9) par l'intermédiaire d'un élément de fermeture de soupape (13) et en ce que son action sur le piston (17) est arrêtée par le ressort de compression (30) quand la soupape de commande n'est pas actionnée, en ce que, de plus, le poussoir (35) est fixé sur le piston (6) déplacé par la tige de manoeuvre (2) et pénètre d'une façon connue dans la première soupape (8), et en ce que la force du ressort de soupape (29), agissant au cours de cette manoeuvre sur le piston (17) par l'intermédiaire d'un élément de fermeture (28) de la deuxième soupape (19), est équilibrée par la force du ressort (12) de la première soupape (8).

2. Soupape selon la revendication 1, caractérisée en ce que le ressort (12) de la première soupape indépendante (8) est déterminant pour les forces d'ouverture sur la deuxième soupape indépendante (19).

3. Soupape selon l'une quelconque des revendications 1 ou 2, caractérisée en ce qu'on a introduit entre le piston d'équilibrage (17) et l'extrémité du ressort (30) située de son côté une cuvette de ressort (31) qui peut être soulevée du piston d'équilibrage par l'extrémité du poussoir (35).

4. Soupape selon l'une quelconque des revendications 1 à 3, caractérisée en ce que le piston (17) possède un embout tubulaire (15) coiffé avec possibilité de glissement par un élément de fermeture (13) de la première soupape (8), avec une lèvre annulaire d'étanchéité en forme.

5. Soupape selon l'une quelconque des revendications 1 à 4, caractérisée en ce que le piston d'équilibrage (17) possède un épaulement intérieur (14) qui sert d'appui pour le ressort (12) de la première soupape (8) agissant sur l'élément de fermeture (13).

6. Soupape selon l'une quelconque des revendications 4 ou 5, caractérisée en ce que l'extrémité, côté soupape (8), de l'embout (15) du piston (17) traverse une paroi annulaire (16) dont le diamètre intérieur correspond au diamètre du siège de sortie (22) de la deuxième soupape (19).

7. Soupape selon l'une quelconque des revendications 1 à 6, caractérisée en ce que le poussoir (35) est vissé dans le piston (6) avec possibilité de réglage longitudinal.